(19) Europäisches Patentamt
European Patent Office
Office européen des brevets

(11) **EP 4 492 875 B1**

(12) **EUROPEAN PATENT SPECIFICATION**

(45) Date of publication and mention
of the grant of the patent:
**17.06.2026  Bulletin 2026/25**

(51) International Patent Classification (IPC):
**G01S 7/00** *(2006.01)*     **H04W 52/02** *(2009.01)*
**H04W 72/02** *(2009.01)*

(21) Application number: **22936940.0**

(22) Date of filing: **15.04.2022**

(52) Cooperative Patent Classification (CPC):
**G01S 7/006; H04W 52/0229; H04W 72/02**

(86) International application number:
**PCT/CN2022/087040**

(87) International publication number:
**WO 2023/197292 (19.10.2023 Gazette 2023/42)**

(54) **METHOD AND APPARATUS FOR WIRELESS COMMUNICATION**

VERFAHREN UND VORRICHTUNG ZUR DRAHTLOSEN KOMMUNIKATION

PROCÉDÉ ET APPAREIL DE COMMUNICATION SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.01.2025  Bulletin 2025/03**

(73) Proprietor: **Quectel Wireless Solutions Co., Ltd.
Shanghai 201601 (CN)**

(72) Inventors:
  • **LYU, Ling**
    **Shanghai 201601 (CN)**
  • **ZHAO, Zheng**
    **Shanghai 201601 (CN)**
  • **YANG, Zhongzhi**
    **Shanghai 201601 (CN)**

(74) Representative: **Murgitroyd & Company
165-169 Scotland Street
Glasgow G5 8PL (GB)**

(56) References cited:
  **WO-A1-2021/218740     WO-A1-2022/065956
  WO-A2-2022/018690     CN-A- 113 099 479**

  • **OPPO: "Discussion on power saving in NR
    sidelink communication", vol. RAN WG1, no. e-
    Meeting; 20211011 - 20211019, 2 October 2021
    (2021-10-02), XP052058019, Retrieved from the
    Internet <URL:https://ftp.3gpp.org/tsg_ran/
    WG1_RL1/TSGR1_106b-e/Docs/R1-2109059.zip
    R1-2109059 OPPO-eSL-power saving.docx>
    [retrieved on 20211002]**
  • **FUJITSU: "Considerations on partial sensing
    and DRX in NR Sidelink", vol. RAN WG1, no. e-
    Meeting; 20211111 - 20211119, 5 November 2021
    (2021-11-05), XP052179413, Retrieved from the
    Internet <URL:https://ftp.3gpp.org/tsg_ran/
    WG1_RL1/TSGR1_107-e/Docs/R1-2111150.zip
    R1-2111150 Considerations on partial sensing
    and DRX in NR sidelink.docx> [retrieved on
    20211105]**
  • **ROBERT BOSCH GMBH: "Discussion on
    sidelink enhancements for power saving", vol.
    RAN WG1, no. E-Meeting; 20211111 - 20211119, 6
    November 2021 (2021-11-06), XP052075452,
    Retrieved from the Internet <URL:https://
    ftp.3gpp.org/tsg_ran/WG1_RL1/TSGR1_107-e/
    Docs/R1-2112394.zip
    R1-2112394_Bosch_Further_SL_Power_Sa-
    ving.docx> [retrieved on 20211106]**
  • **FUJITSU: "Considerations on partial sensing
    and DRX in NR Sidelink", 3GPP TSG RAN WG1
    MEETING #107-E, R1-2111150, 5 November 2021
    (2021-11-05), XP052179413**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present disclosure relates to the technical field of communications, and more particularly, to a method and apparatus for wireless communication.

### BACKGROUND

In order to sense aperiodic resource reservation, a contiguous partial sensing (CPS) mechanism is introduced in the vehicle-to-everything (V2X) system. A V2X device can sense resources reserved by other devices in a CPS sensing window to perform resource selection.

At present, a start time of the CPS sensing window is determined based on the first resource in a candidate resource set. However, the V2X device operating in a discontinuous reception (DRX) mode can only receive sidelink data within an active time. If the start time of the CPS sensing window is still determined based on the first resource in the candidate resource set, there may be a problem of invalid sensing, thereby increasing power consumption of the V2X device. Therefore, in the DRX mode, how to determine the start time of the CPS sensing window to reduce the power consumption of the V2X device is a problem desired to be solved.

OPPO ("Discussion on power saving in NR sidelink communication", R1-2109059, XP052058019, 2 October 2021) discusses the following aspects of resource allocation for power saving: remaining issues in PBPS, PBPS+CPS for periodic transmission, PBPS+CPS for aperiodic transmission, CPS only for aperiodic transmission, random resource selection, re-evaluation and pre-emption checking, SL-DRX, and congestion control.

FUJITSU ("Considerations on partial sensing and DRX in NR Sidelink", R1-2111150, XP052179413, 5 November 2021) provides some considerations on either type of partial sensing schemes respectively and discusses the impact of SL DRX on sensing and resource selection procedure in the contribution, to resolve some FFSs.

ROBERT BOSCH GMBH ("Discussion on sidelink enhancements for power saving", R1-2112394, XP052075452, 6 November 2021) discusses sidelink power saving from automotive and VRU protection point of view.

### SUMMARY

Embodiments of the present disclosure provide a method and apparatus for wireless communication, which can reduce the power consumption of the V2X device. The invention is as defined in the appended set of claims.

### BRIEF DESCRIPTION OF THE DRAWINGS

FIG. 1 is a wireless communication system to which embodiments of the present disclosure are applied.

FIG. 2 is a schematic diagram illustrating resource sensing.

FIG. 3 is a schematic diagram illustrating DRX.

FIG. 4 is a schematic diagram illustrating periodic-based partial sensing (PBPS).

FIG. 5 is a schematic diagram illustrating contiguous partial sensing.

FIG. 6 is a schematic diagram illustrating another contiguous partial sensing.

FIG. 7 is a schematic flowchart of a method for wireless communication according to embodiments of the present disclosure.

FIG. 8 is a schematic diagram illustrating determination of a start time of a CPS sensing window according to embodiments of the present disclosure.

FIG. 9 is a schematic diagram illustrating another determination of a start time of a CPS sensing window according to embodiments of the present disclosure.

FIG. 10 is a schematic block diagram of a communication device according to embodiments of the present disclosure.

Fig. 11 is a schematic configuration diagram of a communication device according to embodiments of the present disclosure.

## DETAILED DESCRIPTION OF THE EMBODIMENTS

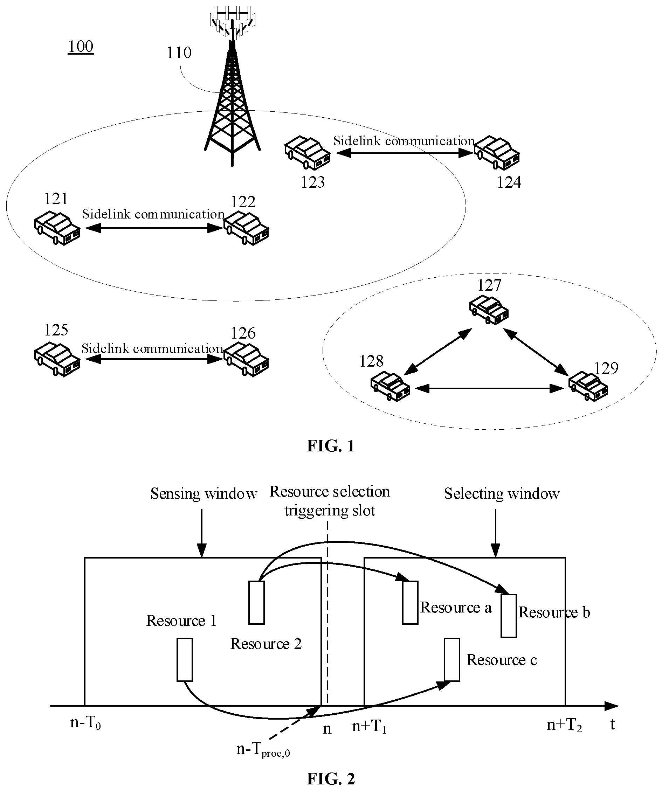

Technical solutions of the present disclosure are described below in conjunction with the accompanying drawings. For ease of understanding, the terms and communication process involved in the present disclosure are first described below in conjunction with FIGS. 1 to 6.

FIG. 1 is a wireless communication system 100 to which embodiments of the present disclosure are applied. The wireless communication system 100 may include a network device 110 and terminals 121 to 129. The network device 110 may provide communication coverage for a particular geographic area and may communicate with terminals located within the coverage area.

In some implementations, the terminals may communicate with each other over a sidelink (SL). Sidelink communication may also referred to as proximity services (ProSe) communication, unilateral communication, side-link communication, device-to-device (D2D) communication, or the like.

Alternatively stated, sidelink data may be transmitted over the slidelink between the terminals. The sidelink data may include data and/or control signalings. In some implementations, the sidelink data may include, for example, a physical sidelink control channel (PSCCH), a physical sidelink shared channel (PSSCH), a PSCCH demodulation reference signal (DMRS), a PSSCH DMRS, a physical sidelink feedback channel (PSFCH), or the like.

Hereinafter, several common sidelink communication scenarios are introduced with reference to FIG. 1. In sidelink communication, three scenarios may be involved depending on whether terminals in a sidelink are within a coverage area of a network device. In the first scenario, the terminals perform sidelink communication within the coverage area of the network device. In the second scenario, some of the terminals perform sidelink communication within the coverage area of the network device. In the third scenario, the terminals perform sidelink communication outside the coverage area of the network device.

As illustrated in FIG. 1, in the first scenario, terminals 121 and 122 may communicate with each other over the sidelink, and the terminals 121 and 122 are both within the coverage area of the network device 110, that is, the terminals 121 and 122 are both within the coverage area of the same network device 110. In this scenario, the network device 110 may transmit a configuration signaling to the terminals 121 and 122, and correspondingly, the terminals 121 and 122 perform communication over the sidelink based on the configuration signaling.

As illustrated in FIG. 1, in the second scenario, the terminals 123 and 124 may carry out communication over the sidelink, where the terminal 123 is within the coverage area of the network device 110 and the terminal 124 is outside the coverage area of the network device 110. In this scenario, the terminal 123 receives configuration information from the network device 110, and carries out communication over the sidelink according to the configuration based on the configuration signaling. However, with respect to the terminal 124, since the terminal 124 is outside the coverage area of the network device 110, the terminal 124 cannot receive configuration information from the network device 110. In this case, the terminal 124 may acquire configuration for sidelink communication based on pre-configured configuration information and/or configuration information transmitted by the terminal 123 within the coverage area, and hence communicate with the terminal 123 over the sidelink based on the acquired configuration.

In some cases, the terminal 123 may transmit the above configuration information to the terminal 124 over a physical sidelink broadcast channel (PSBCH), to configure the terminal 124 to carry out communication over the sidelink.

As illustrated in FIG. 1, in the third scenario, the terminals 125 to 129 are all outside the coverage area of the network device 110, and thus cannot communicate with the network device 110. In this case, the terminals may all carry out sidelink communication based on the pre-configured information.

In some cases, the terminals 127 to 129 outside the coverage area of the network device may constitute a communication group, and the terminals 127 to 129 in the communication group may communicate with each other. In addition, the terminal 127 in the communication group may serve as a central control node, which is also referred to as a cluster header (CH) terminal, and accordingly, the other terminals in the communication group may also be referred to as "cluster members" (or group members).

The terminal 127 as the CH may have one or more of the following functions: establishing the communication group; granting the admission and removal of group members; performing resource coordination to allocate sidelink resources to the group members, and receiving sidelink feedback information from the group members; performing resource coordination with other communication groups; and the like.

It should be noted that FIG. 1 exemplarily illustrates one network device and a plurality of terminal devices. In some embodiments, the wireless communication system 100 may include a plurality of network devices and each of the network devices provide a coverage area for other numbers of terminal devices, which is not limited in the embodiments of the present disclosure.

In some embodiments, the wireless communication system 100 may further include other network entities such as a network controller and a mobility management entity, which is not limited in the embodiments of the present disclosure.

It should be understood that the technical solutions in the embodiments of the present disclosure may be applied to various communication systems, for example: a 5th generation (5G) or a new radio (NR) system, a long-term evolution (LTE) system, an LTE frequency-division duplex (FDD) system and an LTE time-division duplex (TDD) system. The technical solutions in the embodiments of the present disclosure may also be applied to future communication systems, such as a 6th generation (6G) mobile communication system and a satellite communication system.

The terminal in the embodiments of the present disclosure may also be referred to as a user equipment (UE), an access terminal, a subscriber unit, a subscriber station, a mobile station (MS), a mobile terminal (MT), a remote station, a remote terminal, a mobile device, a user terminal, a terminal device, a wireless communication device, a user agent, or a user apparatus. The terminal device in the embodiments of the present disclosure may refer to a device that provides voice and/or data connectivity for users and can be used for connection among human, objects, and machines, such as a handheld device and a vehicle-mounted device having a wireless connection function. The terminal device in the embodiments of the present disclosure may be a mobile phone, a pad, a laptop, a palmtop, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, or the like. In some embodiments, the UE may serve as a base station. For example, the UE may serve as a scheduling entity, which provides sidelink data between UEs in V2X, D2D or the like. For example, a cellular phone and a vehicle communicate with each other based on the sidelink data. The cellular phone and a smart home device communicate with each other without relaying communication signals through a base station.

The network device in the embodiments of the present disclosure may be a device for communication with the terminal device. The network device may also be referred to as an access network device or a wireless access network device. For example, the network device may be a base station. The network device in the embodiments of the present disclosure may refer to a radio access network (RAN) node (or device) that allows a terminal device to access to a wireless network. The base station may broadly cover, or be replaced with, various names such as a node B (NodeB), an evolved NodeB (eNB), a next generation NodeB (gNB), a relay station, an access point, a transmitting and receiving point (TRP), a transmitting point (TP), a primary station MeNB, a secondary station SeNB, a multi-standard radio (MSR) node, a home base station, a network controller, an access node, a wireless node, an access point (AP), a transmission node, a transceiver node, a baseband unit (BBU), a remote ratio unit (RRU), an active antenna unit (AAU), a remote radio head (RRH), a central unit (CU), a distributed unit (DU), a location node, and the like. The base station may be a macro base station, a micro base station, a relay node, a donor node, or the like, or a combination thereof. The base station may also refer to a communication module, a modem, or a chip configured in the above apparatus or device. The base station may also be a mobile switching center, a device that assumes the function of a base station in D2D, V2X, or machine-to-machine (M2M) communication, a network-side device in a 6G network, a device that assumes the function of a base station in a future communication system, or the like. The base station may support networks of the same or different access technologies. The embodiments of the present disclosure do not limit the adopted specific technology and specific device form of the network device.

The base station may be stationary or mobile. For example, a helicopter or unmanned aerial vehicle may be configured to serve as a mobile base station, and one or more cells may move depending on the location of the mobile base station. In other examples, the helicopter or unmanned aerial vehicle may be configured to serve as a device to communicate with another base station.

In some deployments, the network device in the embodiments of the present disclosure may refer to a CU or a DU, or the network device includes a CU and a DU. The gNB may also include an AAU.

The network device and the terminal devices may be deployed on land, including indoor or outdoor, hand-held, or vehicle-mounted; or may be deployed on the water surface; or may be deployed on airplanes, balloons, and satellites. In the embodiments of the present disclosure, the scenario where the network device and the terminal devices are located is not limited.

It should be appreciated that all or some of the functions of the communication devices in the present disclosure may also be implemented by software functions running on hardware, or by virtualization functions instantiated on a platform (e.g., a cloud platform).

## Sidelink resource allocation mode

Currently, in some communication systems (e.g., NR), two resource allocation modes (i.e., the first mode (Mode 1) and the second mode (Mode 2)) for sidelink resources are defined.

In the first mode (Mode 1), the network device schedules the sidelink resources for the terminal device.

At present, in the first Mode, two manners, i.e. dynamic resource allocation and sidelink configured grant (SL CG) are included. In the manner of dynamic resource configuration, the network device can allocate sidelink transmission resources to a terminal by transmitting downlink control information (DCI). In the manner of sidelink configured grant, after a terminal is configured with sidelink resources, if the terminal has data to be transmitted, the terminal can use the configured sidelink resources to transmit data without re-applying for sidelink resources from the network device. Therefore, the transmission delay of the sidelink can be reduced by using the resource allocation mode of configured grant.

The above configured grant is further subdivided into two types. In the first type (Type 1) of the configured grant, allocation of the sidelink resources is based entirely on a radio resource control (RRC) signaling. In the second type (Type 2) of the configured grant, allocation of the sidelink resources in the communication system may be configured by a RRC signaling and a layer 1 (L1) signaling, where the L1 signaling is configured to indicate activation and deactivation of RRC configuration.

In some implementations, the network device may schedule sidelink resources for a single transmission for the terminal. In other implementations, the network device may also configure semi-static sidelink resources for the terminal.

For example, referring to FIG. 1, the terminal devices 121 to 123 are located within the coverage area of the network device 110, and the network device 110 may allocate sidelink resources to the terminal devices 121 to 123.

In the second mode (Mode 2), the terminal selects autonomously sidelink resources in an SL resource pool.

For example, referring to FIG. 1, the terminal devices 124 to 129 are located outside the coverage area of the network device 110, and the terminal devices 124 to 129 can autonomously select sidelink resources by Mode 2.

The SL resource pool may be configured by a network device or be pre-configured. For example, the network device may configure the SL resource pool for the terminal through a higher-layer signaling (such as a RRC signaling).

In this mode, processes performed by the terminal include a resource sensing process and/or a resource selection process. Resource sensing may also be referred to as resource listening or resource detection. For example, the terminal may select SL transmission resources in the SL resource pool in a sensing manner.

In the resource sensing process, the terminal may identify the occupation (or reservation) of sidelink resources by demodulating sidelink control information (SCI), that is, the terminal may acquire resource reservation information of other terminals by demodulating the SCI. The terminal may also identify the occupancy of the sidelink resources by measuring a sidelink receiving power. For example, the terminal may determine the occupancy of sidelink resources based on a value of a reference signal receiving power (RSRP) of a corresponding SL demodulation reference signal (DMRS) when decoding the SCI. In some embodiments, the terminal may select, from the SL resource pool, resources that are not reserved by other terminals or that are reserved by other terminals but have a low receiving power, thereby reducing the probability of resource collisions and improving communication reliability.

The resource sensing process is described below in conjunction with FIG. 2. As shown in FIG. 2, the terminal may sense, in a sensing window, resources in a selecting window, so as to select or exclude candidate resources in the selecting window. The candidate resources in the selecting window are available resources in the SL resource pool. The sensing window may also be referred to as a listening window.

It is assumed that sidelink data of the terminal arrives at a slot n, and thus triggers resource selection. The resource selecting window starts at $n+T_1$ and ends at $n+T_2$. $0 \leq T_1 \leq T_{proc,1}$. Subcarrier spacings of 15 kHz, 30 kHz, 60 kHz and 120 kHz correspond to $T_{proc,1}$ of 3, 5, 9 and 17 slots respectively. $T_{2min} \leq T_2 \leq$ packet delay budget (PDB). The PDB is configured to limit the latest time when the terminal transmits sidelink data, and a size of the PDB is related to a delay requirement of traffic. The PDB may be configured for the terminal by a network device. For example, the network device may configure the PDB for the terminal by a higher-layer signaling (e.g., a RRC signaling). The PDB may also be referred to as the remaining PDB. $T_{2min}$ has possible values of $(1, 5, 10, 20) \times 2^\mu$ slots, where $\mu = 0, 1, 2$, and 3 corresponding to subcarrier spacings of 15 kHz, 30 kHz, 60 kHz, and 120 kHz respectively. The terminal may select resources available for transmission of sidelink data in the resource selecting window, and transmit, on the resources, sidelink data to be transmitted.

The resource sensing window starts at $n-T_0$ and ends at $n-T_{proc,0}$. $T_0$ has a value of 100 ms or 1100 ms. Subcarrier spacings of 15 kHz, 30 kHz, 60 kHz and 120 kHz correspond to $T_{proc,0}$ of 1, 2, 4 and 8 slots respectively.

The terminal may sense, in the sensing window, candidate resources in the selecting window to determine whether the candidate resources are available for transmission of sidelink data. For ease of description, the candidate resources in the above selecting window is referred to as a set A. The candidate resources may be resources in the selecting window that can meet the transmission requirements of sidelink data. For example, the terminal may determine candidate resources in the SL resource pool with the number of subchannels as the resource granularity. The candidate resources are resources in the SL resource pool. The number of subchannels may represent a number of subchannels occupied by sidelink data to be transmitted of the terminal. The number of subchannels may be configured by the network device for the terminal. For example, the network device may configure the number of subchannels for the terminal through a higher-layer signaling (such as a RRC signaling).

If the terminal senses resource reservation information of other terminals in the sensing window, and resources reserved by the other terminals are in the resource selecting window, the terminal may exclude the corresponding resources from the set A. In some embodiments, if the terminal senses resource reservation information of other terminals in the sensing window, resources reserved by the other terminals are in the resource selecting window, and a measured RSRP is greater than a preset threshold, the terminal may exclude the corresponding resources from the set A.

Taking FIG. 2 as an example, if the terminal senses resource reservation information of another terminal on Resource 1 in the sensing window, and the resource reservation information indicates that the resource reserved by the another terminal is Resource c, the terminal may exclude Resource c from the set A. For another example, if the terminal senses resource reservation information of another terminal on Resource 2 in the sensing window, and the resource reservation information indicates that the resources reserved by the another terminal are Resource a and Resource b, the terminal may exclude Resource a and Resource b from the set A. After the above resource sensing and resource exclusion, the terminal may transmit sidelink data on the set (called a set B) of the remaining resources. The terminal may select a time-frequency resource from the set B to transmit sidelink data. In some embodiments, the terminal may randomly select a time-frequency resource from the set B to transmit sidelink data. In other embodiments, the terminal may select a time-frequency resource from the set B to transmit sidelink data according to a certain rule.

## Sidelink transmission mode

V2X communication involves exchange of information not only between vehicles themselves, but also between vehicles and external systems such as street lights, buildings, pedestrians and wireless communication networks. The V2X system enables a vehicle to acquire information related to weather, nearby accidents, road conditions, nearby vehicle and pedestrian activities and objects near the vehicle, which can be used for services such as improving vehicle driving experience, increasing vehicle safety and providing autonomous driving. With the growing demand for V2X communication, the 3rd generation partner project (3GPP) has also advanced V2X sidelink technology within the framework of the 5G NR system for satisfying enhanced vehicle driving experience such as automatic queuing driving, support for extended sensing, semi-autonomous or fully autonomous driving and remote driving.

With the development of autonomous driving technology, the autonomous driving technology may be integrated with a communication system, or rather the communication system need to be used to achieve data interaction between vehicle devices. Therefore, higher requirements are placed on the communication system. For example, the communication system is required to support higher throughput, lower delay, higher reliability, larger coverage, more flexible resource allocation, and the like. In LTE-V2X, only a mode of broadcast is supported for sidelink communication between terminal devices. With the development of technology, in NR-V2X, transmission modes of unicast and groupcast are introduced.

With respect to the unicast transmission mode, there is typically only one terminal that receives sidelink data. Referring to FIG. 1, the terminal 121 and the terminal 122 may communicate with each other based on the unicast transmission mode. When the terminal 121 transmits sidelink data over a sidelink, the terminal 122 serves as the only receiving device to receive the sidelink data.

With respect to the groupcast transmission mode, terminals receiving sidelink data may be all terminals in a communication group. Alternatively, terminals receiving sidelink data may be all terminal devices within a specific transmission distance. For example, referring to FIG. 1, for a communication group including the terminals 127 to 129, when the terminal 127 transmits sidelink data in the groupcast mode, the other terminals 128 and 129 in the communication group are receiving terminals that receive the sidelink data. For another example, referring to FIG. 1, assuming that terminal devices within a predetermined area include the terminal devices 127 to 129, when the terminal device 127 transmits sidelink data in the groupcast mode, the other terminal devices 128 and 129 within the predetermined area are all receiving terminals that receive the sidelink data.

With respect to the broadcast transmission mode, a terminal receiving sidelink data may be any terminal in the vicinity of a terminal serving as a transmitter. For example, referring to FIG. 1, assuming that the terminal 125 serves as a transmitter and transmits sidelink data in a broadcast mode, the terminals 121 to 124 and 126 to 129 in the vicinity of the terminal 125 may each serve as a receiver receiving the sidelink data.

At present, the design of the sidelink is based on the fact that the V2X terminal always operates with sufficient battery capacity. In the study of sidelink, however, power saving is an important consideration, that is, the terminal needs to operate the sidelink in a way of improving power efficiency when is battery-constrained.

In order to reduce the power consumption of the terminal, the DRX mechanism is introduced in some communication systems, so that the terminal does not have to turn on a receiver all the time when there is no data reception, but enters a discontinuous receiving state, so as to achieve the purpose of saving power. The DRX mechanism of the embodiments of the present disclosure is described below.

## DRX

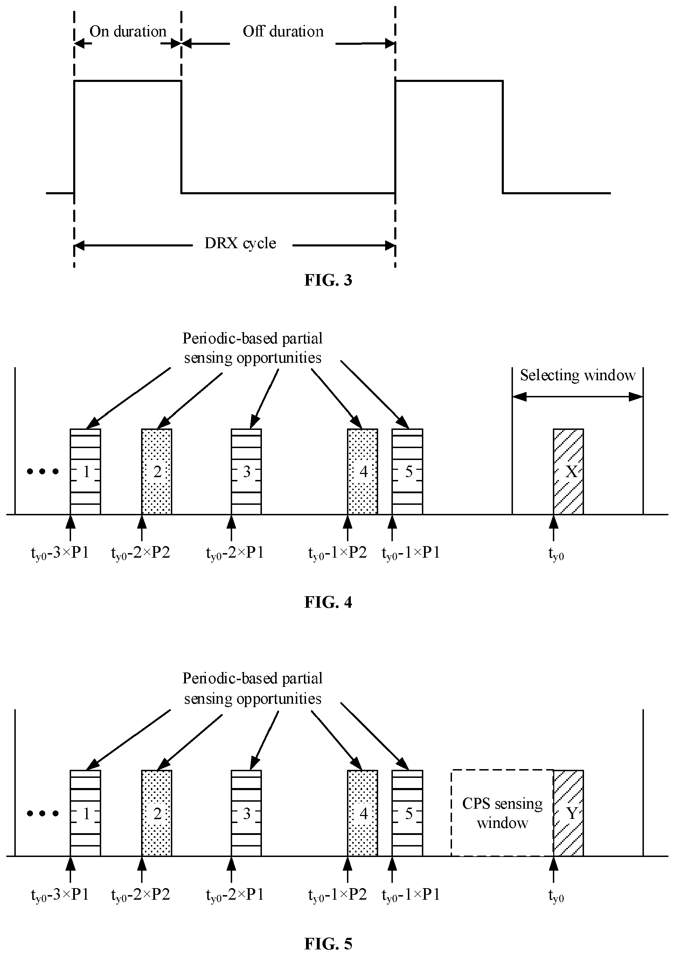

FIG. 3 is a schematic diagram illustrating DRX. As shown in FIG. 3, a DRX cycle includes "on duration or active time" and "off duration or opportunity for DRX". For example, the on duration may refer to a time range during which a timer has not expired, that is, being operating. The timer may be drx-onDurationTimer, drx-InactivityTimer, drx-RetransmissionTimerDL, drx-RetransmissionTimerUL, ra-ContentionResolutionTimer, or the like. In the on duration, the terminal monitors sidelink channels including a physical sidelink control channel (PSCCH) and receives signals. In the off duration, the terminal enters a sleep state and does not monitor sidelink channels such as PSCCH and does not receive signals to reduce power consumption.

The network device configures a DRX cycle for the terminal, and may adopt a manner of configuring a timer. For example, the network device may carry out timekeeping for a short cycle by configuring a DRX short cycle timer DrxshortCycleTimer. When the DrxshortCycleTimer is started, timing is started for the DRX short cycle, and when the DrxshortCycleTimer expires, the DRX short cycle ends. In another example, the network device may carry out timekeeping for a long cycle by configuring a DRX long cycle timer DrxlongCycleTimer. When the DrxlongCycleTimer is started, timing is started for the DRX long cycle, and when the DrxlongCycleTimer expires, the DRX long cycle ends.

When the drx-onDurationTimer is used for timing in an active period of the DRX cycle, after the drx-onDurationTimer is started, the terminal needs to listen to PSCCH until the drx-onDurationTimer expires. The terminal starts the timer at the beginning of each new DRX cycle. As shown in FIG. 3, the on duration is part of the DRX cycle. The drx-onDurationTimer is a timer corresponding to the on duration. When the drx-onDurationTimer is started, the terminal enters the on duration until the drx-onDurationTimer ends. The time duration of the drx-OndurationTimer may be configured by a network device. For example, the duration of the drx-OndurationTimer may be configured by a higher-layer parameter to be 2 slots.

If both the DRX short cycle and DRX long cycle are configured for the terminal, the duration of the drx-OndurationTimer for the DRX short cycle and the duration of the drx-OndurationTimer for the DRX long cycle may be the same or different.

For the DRX short cycle, the terminal may start the Drx-OndurationTimer timer in the DRX cycle if the terminal meets the following conditions:

[(SFN*10) + subframe number] modulo (shortDRX-Cycle) = (drxStartOffset) modulo (shortDRX-Cycle).

For the DRX long cycle, the terminal may start the Drx-OndurationTimer timer in the DRX cycle if the terminal meets the following conditions:

$$[(SFN*10) + \text{subframe number}] \text{ modulo (longDRX-Cycle)} = \text{drxStartOffset}.$$

SFN represents a current system frame number, subframe number represents a subframe number, modulo represents a modulo operation, shortDRX-Cycle represents a DRX short cycle, drxstartoffset represents a start position of a DRX cycle (the start position of the DRX cycle may be in units of sub-frames, slots, or symbols; for example, sub-frame 0 is the start position of the DRX cycle, or symbol 1 is the start position of the DRX cycle), and longDRX-Cycle represents a DRX long cycle.

In addition to the DRX, there is a power-saving mechanism, i.e., a partial sensing mechanism. The partial sensing mechanism may refer to that the terminal selects resources according to resource occupation information of part of time units in the sensing window. The part of time units may be continuous or discontinuous. Compared with a full sensing mechanism, the partial sensing mechanism only requires sensing of the part of time units in the sensing window, thereby reducing the power consumption of the terminal. In some embodiments, the time units may be wireless frames, subframes, slots, symbols, or other time units, which are not specifically limited herein. A description is given with an example of being in units of slots.

The partial sensing mechanisms may include a periodic-based partial sensing (PBPS) mechanism and a CPS mechanism. The two mechanisms are introduced separately below.

PBPS may refer to that there is a periodic interval between two sensing resources. The terminal transmits data periodically when performing data transmission. For example, the terminal may periodically reserve resources. Taking a period P1 as an example, the terminal may transmit resource reservation indication information on a slot n-P1 to reserve resources on a slot n. As shown in FIG. 4, the PBPS may include sensing opportunities based on period P1 and sensing opportunities based on period P2.

Referring to FIG. 4, a resource X is the first resource in candidate resources. The first resource in the candidate resources may be understood as a resource located at the first in a time domain among the candidate resources. $t_{y0}$ is a start time of the resource X. If sensing opportunities are determined according to the period P1, sensing opportunities in the sensing window may include a resource 1, a resource 3, and a resource 5. The resource 1, the resource 3 and the resource 5 have start times of $t_{y0}$-3×P1, $t_{y0}$-2×P1 and $t_{y0}$-1×P1 respectively. If sensing opportunities are determined according to the period P2, sensing opportunities in the sensing window may include a resource 2 and a resource 4. The resource 2 and the resource 4 have start times of $t_{y0}$-2×P2 and $t_{y0}$-1×P2 respectively.

If traffic of the terminal is periodic, the PBPS mechanism may be used to sense resources in the selecting window to determine available resources in the selecting window. However, some communication systems (such as NR-V2X) have introduced aperiodic traffic therein, that is, the terminal may support both periodic traffic and aperiodic traffic. When the terminal completes the resource selection, the resources that have been selected but is not indicated with SCI that is transmitted may be reserved by other terminals for aperiodic burst traffic, resulting in resource collisions. In view of this problem, the terminal needs to sense both periodic resource reservation and aperiodic resource reservation. On this basis, the continuous partial sensing mechanism is introduced.

The CPS may be performed on the basis of the PBPS. For example, the embodiments of the present disclosure may first use the PBPS mechanism to filter resources in the selecting window to obtain a resource set B, and then use the CPS mechanism to filter resources in the set B to obtain a resource set C. The terminal may use resources in the resource set C for sidelink transmission.

Taking FIG. 5 as an example to illustrate, the terminal may sense during a continuous period of time prior to a resource Y, where the continuous period of time is also referred to as a CPS sensing window. The CPS sensing window is used for sensing of aperiodic resource reservation. The resource Y is the first resource in a resource set selected based on the PBPS. In other words, the resource Y is the first resource in the above resource set B. The resource Y may be the same or different from the resource X in FIG. 4. For example, if the terminal senses that the resource X has been reserved by other terminals during the PBPS process, the resource Y is different from the resource X.

The time duration of the CPS sensing window may be the maximum time interval between two data transmissions. The CPS sensing window may have a time duration of M slots. M has a default value of, for example, 31. For example, if the maximum time interval between two data transmissions is 31 slots, the time duration of the CPS sensing window is 31 slots. The CPS sensing window may be 31 slots prior to a start time of the resource Y. In other words, a start time of the CPS sensing window may be the 31th slot before the start time of the resource Y. Of course, the time duration of the CPS sensing window may be configured by a network device, or may be predefined in the protocol.

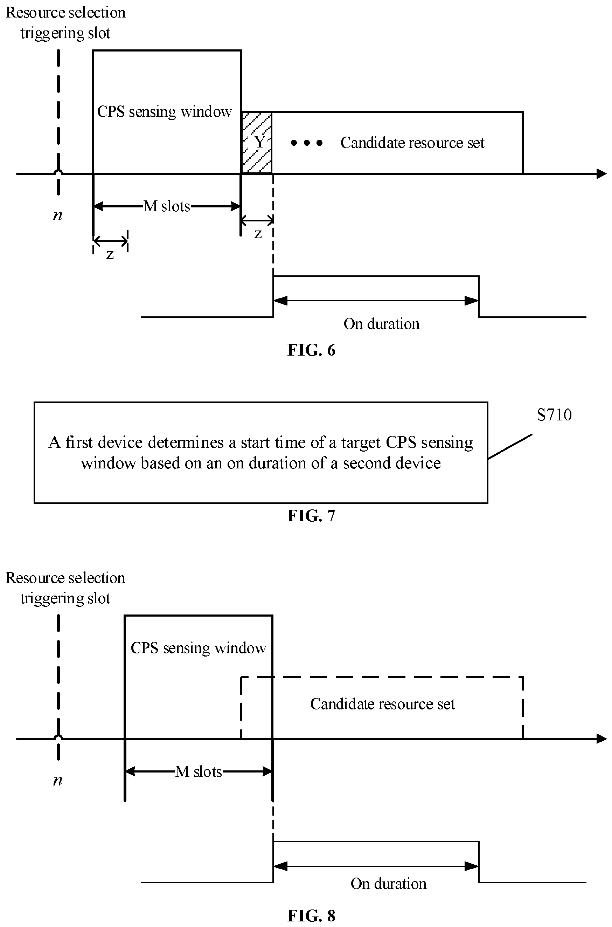

As can be seen from the above, the start time of the CPS sensing window is determined based on the first resource in the candidate resource set, that is, a time interval between the start time of the CPS sensing window and the start time of the first resource is a time duration of one CPS sensing window. However, in the DRX mode, a transmitting terminal can only transmit data in the on duration of a receiving terminal, and does not transmit data in the off duration of the receiving terminal. If the on duration of the receiving terminal is not taken into account when determining the start time of the CPS sensing window, this may lead to the problem of invalid sensing (or called redundant sensing). Taking FIG. 6 as an example, in response to the start time of the on duration of the receiving terminal being later than the start time of the first resource, e.g., by z slots, the transmitting terminal does not transmit sidelink data on the first resource, but transmit the sidelink data only in the on duration of the receiving terminal. In this case, sensing in the first z slots in the CPS sensing window is redundant or invalid, which leads to an increase in power consumption of the transmitting terminal.

Based on the above, the embodiments of the present disclosure provide a method and apparatus for wireless communication, where the start time of the CPS sensing window is determined based on the on duration so that the time interval between the start time of the CPS sensing window and the start time of the on duration is less than or equal to the time duration of the CPS sensing window, thereby avoiding redundant sensing and reducing power consumption.

The method for wireless communication according to the embodiments of the present disclosure is described in detail below with reference to FIG. 7.

Referring to FIG. 7, in step S710, a first device determines, as claimed, a start time of a target CPS sensing window based on an on duration of a second device. A time interval between the start time of the target CPS sensing window and a start time of the on duration is less than or equal to a time duration of the target CPS sensing window.

The first device and the second device are devices that perform sidelink communication. The first device may be a transmitting terminal, or the first device may also be referred to as a sensing terminal. The second device is a receiving terminal.

The on duration of the second device may be a long-period on duration or a short-period on duration, which is not specifically limited in the embodiments of the present disclosure.

The time duration of the target CPS sensing window may be predefined in a protocol or may be configured by a network device. The time duration of the target CPS sensing window is the maximum time interval between two consecutive data transmissions of the second device. In some embodiments, the time duration of the target CPS sensing window may be 31 slots.

The communication mode between the first device and the second device may be unicast, groupcast, broadcast, or the like. If the groupcast or broadcast mode is adopted, the second device is one of a plurality of receiving terminals.

The on duration of the second device may be transmitted by the second device to the first device. Alternatively, the on duration of the second device may be determined by the first device. For example, the second device may transmit its own on duration to the first device. For another example, the second device may transmit its own off duration to the first device, and the first device may determine the on duration of the second device based on the off duration of the second device. For another example, the first device may transmit its own DRX configuration parameters to the first device, and the first device may determine the on duration of the second device based on the DRX configuration parameters of the second device.

The first device may sense, in the CPS sensing window, a candidate resource set in a selecting window to determine whether resources in the candidate resource set are available and/or reserved by other devices.

In some embodiments, the first device may determine a resource selection set based on a sensing result in the CPS sensing window. For example, if the first device senses in the CPS sensing window that a resource m in the candidate resource set has been reserved by other devices, the first device may exclude the resource m from the candidate resource set. After the resource exclusion, the remaining resources form the resource selection set. That is, the resource selection set includes resources that are not reserved by other devices. The resource exclusion process has been described in detail earlier and is not repeated here to avoid redundancy.

After determining the resource selection set, the first device may transmit sidelink data to the second device by using the resources in the resource selection set. For example, the first device may select one resource from the resource selection set to transmit sidelink data to the second device. The first device may select a transmission resource randomly or according to a preset rule, which is not specifically limited by the embodiments of the present disclosure. In some embodiments, the first device may periodically transmit sidelink data to the second device.

In some embodiments, the first device may determine the start time of the target CPS sensing window based on the on duration of the second device and the candidate resource set. In some embodiments, the first device may determine the start time of the CPS sensing window based on the later of the start time of the on duration of the second device and the start time of the first resource in the candidate resource set. For example, in response to the start time of the on duration of the second device being later than the start time of the first resource in the candidate resource set, the first device may determine the start time of the CPS sensing window based on the start time of the on duration of the second device. In response to the start time of the first resource in the candidate resource set being later than the start time of the on duration of the second device, the first device may determine the start time of the CPS sensing window based on the start time of the first resource in the candidate resource set.

As claimed, a time interval between the start time of the target CPS sensing window and the start time of the first resource in the candidate resource set is less than or equal to a time duration of the CPS sensing window, and a time interval between the start time of the target CPS sensing window and the start time of the on duration is also less than or equal to the time duration of the CPS sensing window.

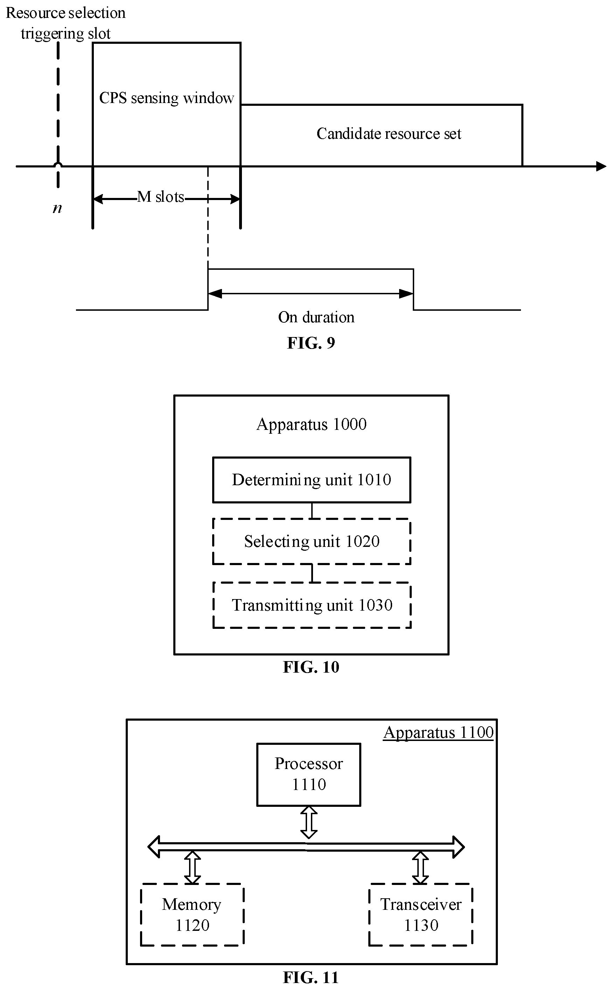

In some embodiments, a time interval between the start time of the target CPS sensing window and a first time is the time duration of the CPS sensing window. The first time is the later of the start time of the first resource in the candidate resource set and the start time of the on duration. A description is given below in conjunction with FIG. 8 and FIG. 9.

FIG. 8 shows a case where the start time of the on duration is later than the start time of the first resource in the candidate resource set. In response to the start time of the on duration being later than the start time of the first time domain resource, the time interval between the start time of the target CPS sensing window and the start time of the on duration is the time duration of the CPS sensing window. In this case, the CPS sensing window partially overlaps with some resources in the candidate resource set in the time domain.

FIG. 9 shows a case where the start time of the first resource in the candidate resource set is later than the start time of the on duration. In response to the start time of the first resource in the candidate resource set being later than the start time of the on duration, the time interval between the start time of the target CPS sensing window and the start time of the first resource is the time duration of the CPS sensing window. In this case, the CPS sensing window partially overlaps with the on duration in the time domain.

The candidate resource set in the embodiments of the present disclosure may be a resource set determined according to the PBPS. The first device may first select resources from the selecting window based on the PBPS to obtain a candidate resource set. Then, the first device may perform a selection operation on the candidate resource set based on the CPS to obtain a resource selection set. Further, the first device may select one resource from the resource selection set to transmit sidelink data.

For ease of understanding, schemes of the embodiments of the present disclosure are exemplified below.

The network device may configure one or more of the following parameters for the first device via a high-layer signaling: a SL resource pool, a number of subchannels, and a remaining PDB.

The first device may determine the selecting window and sensing opportunities of the PBPS based on an arrival time of sidelink data to be transmitted. The resource selection window starts at $n+T_1$ and ends at $n+T_2$, where $0 \leq T_1 \leq T_{proc,\,1}$, and $T_{2min} \leq T_2 \leq PDB$.

After determining the selecting window, the first device may determine a first resource set in the selecting window. The first resource set is a set of resources available for transmission of sidelink data to be transmitted. For example, the first device may select available resources in the SL resource pool with the number of subchannels as the resource granularity to obtain the first resource set. It should be understood that resources in the first resource set are located in the selecting window.

The first device performs sensing in the sensing opportunities of the PBPS to determine whether the resources in the first resource set are reserved by other terminals. For example, the first device may receive SCI transmitted by other terminals in the sensing opportunities of the PBPS. If the SCI indicates that the other terminals has reserved resources, and the reserved resources are resources in the first resource set, the first device may exclude the resources from the first resource set. After the resource exclusion, a second resource set is obtained.

In order to avoid collisions with aperiodic burst traffic, the first device may sense in the CPS sensing window to determine whether resources in the second resource set in the selecting window are reserved by other terminals. In some embodiments, the start time of the CPS sensing window may be after the arrival time of the sidelink data. Taking FIGS. 8 and 9 as an example, the start time of the CPS sensing window is after a resource selection triggering slot. The resource selection triggering slot is an arrival time of sidelink data.

The first device may determine the start time of the CPS sensing window based on the on duration of the second device and the first resource in the second resource set. For example, in response to the start time of the on duration of the second device being later than the start time of the first resource in the second resource set, the time interval between the start time of the CPS sensing window and the start time of the on duration of the second device is the time duration of the CPS sensing window (e.g., M slots). In response to the start time of the first resource in the second resource set being later than the start time of the on duration of the second device, the time interval between the start time of the CPS sensing window and the start time of the first resource in the second resource set is the time duration of the CPS sensing window (e.g., M slots).

The first device senses in the CPS sensing window to determine a third resource set. If the first device receives, in the CPS sensing window, SCI that is transmitted by other terminals and indicates that the other terminals have reserved resources, and the reserved resources are resources in the second resource set, the first device may exclude the resources from the second resource set. After the above resource exclusion, a third resource set is obtained.

The first device may select one time-frequency resource in the third resource set, and use the time-frequency resource to transmit sidelink data to the second device.

The method embodiments of the present disclosure are described in detail above with reference to FIGS. 1 to 9, and device embodiments of the present disclosure are described in detail below with reference to FIGS. 10 to 11. It should be understood that the description of the method embodiments corresponds to the description of the device embodiments and therefore portions not described in detail can be referred to the previous method embodiments.

FIG. 10 is a schematic diagram of a communication apparatus according to embodiments of the present disclosure. The apparatus 1000 may be any of the first devices described above. The apparatus 1000 shown in FIG. 10 includes a determining unit 1010.

The determining unit 1000 is configured to determine a start time of a target CPS sensing window based on an on duration of a second device, where a time interval between the start time of the target CPS sensing window and a start time of the on duration is less than or equal to a time duration of the CPS sensing window.

The determining unit 1000 is specifically configured to determine the target CPS sensing window based on the on duration and a candidate resource set. The time interval between the start time of the target CPS sensing window and the start time of the on duration is less than or equal to the time duration of the CPS sensing window, and a time interval between the start time of the target CPS sensing window and a start time of the first resource in the candidate resource set is less than or equal to the time duration of the CPS sensing window.

In some embodiments, a time interval between the start time of the target CPS sensing window and a first time is equal to the time duration of the CPS sensing window, the first time being the later of the start time of the on duration and the start time of the first resource in the candidate resource set.

In some embodiments, in response to the start time of the on duration being later than the start time of the first resource in the candidate resource set, the time interval between the start time of the target CPS sensing window and the start time of the on duration is equal to the time duration of the CPS sensing window; and in response to the first resource in the candidate resource set being later than the start time of the on duration, the time interval between the start time of the target CPS sensing window and the start time of the first time domain resource in the candidate resource set is equal to the time duration of the CPS sensing window.

In some embodiments, the candidate resource set is a set of resources selected based on PBPS.

In some embodiments, the time duration of the CPS sensing window is 31 slots.

In some embodiments, the determining unit 1000 is further configured to determine a resource selection set according to a sensing result in the CPS sensing window. The apparatus further includes a selecting unit 1020 and a transmitting unit 1030. The selecting unit 1020 is configured to select a target time-frequency resource from the resource selection set, and the transmitting unit 1030 is configured to transmit sidelink data to the second device on the target time-frequency resource.

FIG. 11 is a schematic structural diagram of a communication apparatus of embodiments of the present disclosure. A dotted line in FIG. 11 indicates that the unit or module is optional. The apparatus 1100 may be configured to implement the method described in the above method embodiments. The apparatus 1100 may be a chip or a terminal device. For example, the apparatus 1100 may be a first device as described above.

The communication apparatus 1100 may include one or more processors 1110. The processor 1110 may support implementation of the method according to the above method embodiments by the communication apparatus 1100. The processor 1110 may be a general purpose processor or an application-specific processor. For example, the processor may be a central processing unit (CPU). Alternatively, the processor may be another general processor, a digital signal processor (DSP), an application specific integrated circuit (ASIC), a field programmable gate array (FPGA) or another programmable logic device, a discrete gate or transistor logic device, a discrete hardware component, or the like. The general-purpose processor may be a microprocessor, any customary processor or the like.

The communication apparatus 1100 may further include one or more memories 1120. The memory 1120 has stored thereon a program that is executable by the processor 1110 to cause the processor 1110 to perform the method described in the above method embodiments. The memory 1120 may be separate from the processor 1110 or integrated within the processor 1110.

The communication apparatus 1100 may also include a transceiver 1130. The processor 1110 may communicate with other devices or chips by the transceiver 1130. For example, the processor 1110 may communicate (transmit and receive) data with other devices or chips by the transceiver 1130.

Some embodiments of the present disclosure further provide a computer-readable storage medium configured to store one or more programs. The computer-readable storage medium may be applied to a terminal or a network device according to the embodiments of the present disclosure, and the one or more programs cause a computer to perform the method performed by the terminal or the network device according to the respective embodiments of the present disclosure.

Some embodiments of the present disclosure further provide a computer program product. The computer program product includes one or more programs. The computer program product may be applied to a terminal or a network device according to the embodiments of the present disclosure, and the one or more programs cause a computer to perform the method performed by the terminal or the network device according to the respective embodiments of the present disclosure.

Some embodiments of the present disclosure further provide a computer program. The computer program may be applied to a terminal or a network device according to the embodiments of the present disclosure, and the computer program causes a computer to perform the method performed by the terminal or the network device according to the respective embodiments of the present disclosure.

The terms "system" and "network" in the present disclosure may be used interchangeably. Further, the terms used herein are for the purpose of describing particular embodiments of the present disclosure only and are not intended to limit the present disclosure. The terms such as "first," "second," "third," "fourth," and the like in the specifications, claims and the accompanying drawings of the present disclosure are intended to distinguish different objects but are not intended to define a specific sequence. In addition, terms "comprise," "include," and variations thereof are intended to cover a non-exclusive meaning.

In the embodiments of the present disclosure, "an indication" mentioned in the specification may be a direct indication, an indirect indication, or an association. By way of example, A indicates B, which can mean that A directly indicates B, e.g., B can be obtained by A, can also mean that A indicates B indirectly, for example A indicates C, and B can be obtained by C, and can also mean that there is an association between A and B.

In the embodiments of the present disclosure, the term "correspond" may mean that there is a direct correspondence or an indirect correspondence between the two, may also mean that there is a correlation between the two, and may also mean a relationship such as indicating and being indicated, configuring and being configured, or the like.

In embodiments of the present disclosure, "predefined" or "pre-configured" may be implemented by pre-storing a corresponding code, table, or other means that may be used to indicate relevant information in a device (e.g., including a terminal device and a network device), and the present disclosure does not limit the specific implementation thereof. For example, the term "predefined" may refer to "defined in the protocol."

In embodiments of the present disclosure, the term "protocol" may refer to a standard protocol in the field of communications, and may include, for example, the LTE protocol, the NR protocol, and related protocols used in future communication systems, without limitation.

In embodiments of the present disclosure, B being determined based on A does not mean that the determining of B is solely based on B, but mean that it is also possible that B is determined based on A and/or other information.

In embodiments of the present disclosure, the term "and/or" is merely to describe an association relationship of associated objects, which represents that there may exist three types of relationships, for example, A and/or B may represent three situations: only A exists, both A and B exist, and only B exists. In addition, the forward-slash symbol "/" generally represents an "or" relationship between associated objects before and after the symbol.

In various embodiments of the present disclosure, the sequence numbers of the above various processes do not denote a sequential order of performing the processes, which should be determined according to the functions and internal logics of the processes, and shall not cause any limitation to the implementation process of the embodiments of the present disclosure.

In the several embodiments provided in the present disclosure, it should be understood that the disclosed system, apparatus and method may be practiced in other manners. The above described device embodiments are merely illustrative. For example, the unit division is merely logical function division and there may be other divisions in actual practice. For example, multiple units or components may be combined or integrated into another system, or some features can be ignored or not performed. In addition, the displayed or discussed mutual couplings or direct couplings or communication connections may be implemented through some interfaces. The indirect couplings or communication connections between the devices or units may be implemented in electronic, mechanical or other forms.

The units which are described as separate components may be physically separated or may be not physically separated, and the components which are illustrated as units may be or may not be physical units, that is, the components may be located in the same location or may be distributed into a plurality of network units. Some of or all of the units may be selected according to actual needs to achieve the objectives of the solutions of the embodiments.

In addition, functional units in the embodiments of the present disclosure may be integrated into one processing unit, or each of the units may exist alone physically, or two or more units may be integrated into one unit.

In the above embodiments, the technical solutions may be totally or partially practiced by software, hardware, firmware or any combination thereof. During practice by software, the technical solutions may be totally or partially implemented in the form of a computer program product. The computer program product includes one or a plurality of computer-executable instructions. The computer program instructions, when loaded and executed on a computer, may produce totally or partially the procedures or functions in the embodiments of the present disclosure. The computer may be a general computer, a dedicated computer, a computer network, or another programming device. The computer instructions may be stored in a computer-readable storage medium, or transferred from one computer-readable storage medium to another. For example, the computer instructions may be transmitted from one website, computer, server or data center to another in a wired fashion, for example, a coaxial cable, an optical fiber, a digital subscriber line (DSL) or a wireless fashion, for example, an infrared ray, a radio, a microwave or the like. The computer-readable storage medium may be any available medium that is accessible by a computer or a data storage device such as a server, a data center or the like integrated with one or a plurality of available media. The available medium may be a magnetic medium (for example, a floppy disk, a hard disk or a magnetic tape), an optical medium (for example, a digital video disc (DVD)), a semiconductor medium (for example, a solid state disk (SSD)), or the like.

The protection scope of the present disclosure is subject to the appended claims.

**Claims**

1. A method for wireless communication, comprising:

   determining (S710), by a first device, a start time of a target contiguous partial sensing, CPS, sensing window based on an on duration of a second device, wherein a time interval between the start time of the target CPS sensing window and a start time of the on duration is less than or equal to a time duration of the CPS sensing window,
   wherein determining, by the first device, the start time of the target CPS sensing window based on the on duration of the second device comprises:
   determining, by the first device, the start time of the target CPS sensing window based on the on duration and a candidate resource set, wherein the time interval between the start time of the target CPS sensing window and the start time of the on duration is less than or equal to the time duration of the CPS sensing window, and a time interval between the start time of the target CPS sensing window and a start time of the first resource in the candidate resource set is less than or equal to the time duration of the CPS sensing window.

2. The method of claim 1, wherein a time interval between the start time of the target CPS sensing window and a first time is equal to the time duration of the CPS sensing window, the first time being the later of the start time of the on duration and the start time of the first resource in the candidate resource set.

3. The method of claim 1 or 2, wherein in response to the start time of the on duration being later than the start time of the first resource in the candidate resource set, the time interval between the start time of the target CPS sensing window and the start time of the on duration is equal to the time duration of the CPS sensing window; and
   wherein in response to the start time of the first resource in the candidate resource set being later than the start time of the on duration, the time interval between the start time of the target CPS sensing window and the start time of the first resource in the candidate resource set is equal to the time duration of the CPS sensing window.

4. The method of any one of claims 1 to 3, wherein the candidate resource set is a set of resources selected based on periodic-based partial sensing, PBPS.

5. The method of any one of claims 1 to 4, wherein the time duration of the CPS sensing window is 31 slots.

6. The method of any one of claims 1 to 5, further comprising:

   determining, by the first device, a resource selection set according to a sensing result in the CPS sensing window;
   selecting, by the first device, a target time-frequency resource from the resource selection set;
   transmitting, by the first device, sidelink data to the second device on the target time-frequency resource.

7. An apparatus (1000) for wireless communication, wherein the apparatus (1000) is a first device and comprises:

   a determining unit (1010), configured to determine a start time of a target contiguous partial sensing, CPS, sensing window based on an on duration of a second device, wherein a time interval between the start time of the target CPS sensing window and a start time of the on duration is less than or equal to a time duration of the CPS sensing window,
   wherein the determining unit (1010) is specifically configured to:

   determine the start time of the target CPS sensing window based on the on duration and a candidate resource set, wherein the time interval between the start time of the target CPS sensing window and the start time of the on duration is to be
   less than or equal to the time duration of the CPS sensing window, and a time interval between the start time of the target CPS sensing window and a start time of the first resource in the candidate resource set is to be less than or equal to the time duration of the CPS sensing window

8. The apparatus (1000) of claim 7, wherein a time interval between the start time of the target CPS sensing window and a first time is equal to the time duration of the CPS sensing window, the first time being the later of the start time of the on duration and the start time of the first resource in the candidate resource set.

9. The apparatus (1000) of claim 7 or 8, wherein in response to the start time of the on duration being later than the start time of the first resource in the candidate resource set, the time interval between the start time of the target CPS sensing window and the start time of the on duration is equal to the time duration of the CPS sensing window; and wherein in response to the start time of the first resource in the candidate resource set being later than the start time of the on duration, the time interval between the start time of the target CPS sensing window and the start time of the first resource in the candidate resource set is equal to the time duration of the CPS sensing window.

10. The apparatus (1000) of any one of claims 7 to 9, wherein the candidate resource set is a set of resources selected based on periodic-based partial sensing, PBPS.

11. The apparatus (1000) of any one of claims 7 to 10, wherein the time duration of the CPS sensing window is 31 slots.

12. The apparatus (1000) of any one of claims 7 to 11, wherein the determining unit (1010) is further configured to determine a resource selection set according to a sensing result in the CPS sensing window; and
    wherein the apparatus (1000) further comprises:

    a selecting unit (1020), configured to select a target time-frequency resource from the resource selection set; and
    a transmitting unit (1030), configured to transmit sidelink data to the second device on the target time-frequency resource.

13. A computer-readable storage medium storing a program causing a computer to perform the method of any one of claims 1 to 6.

**Patentansprüche**

1. Verfahren zur drahtlosen Kommunikation, umfassend:

   Bestimmen (S710), durch eine erste Vorrichtung, eines Startzeitpunkts eines Ziel-Contiguous-Partial-Sensing (CPS)-Abtastfensters basierend auf einer On-Duration einer zweiten Vorrichtung, wobei ein Zeitintervall zwischen dem Startzeitpunkt des Ziel-CPS-Abtastfensters und einem Startzeitpunkt der On-Duration kleiner oder gleich einer Zeitdauer des CPS-Abtastfensters ist,
   wobei Bestimmen, durch die erste Vorrichtung, des Startzeitpunkts des Ziel-CPS-Abtastfensters basierend auf der On-Duration der zweiten Vorrichtung Folgendes umfasst:
   Bestimmen, durch die erste Vorrichtung, des Startzeitpunkts des Ziel-CPS-Abtastfensters basierend auf der On-Duration und einem Kandidatressourcensatz, wobei das Zeitintervall zwischen dem Startzeitpunkt des Ziel-CPS-Abtastfensters und dem Startzeitpunkt der On-Duration kleiner oder gleich der Zeitdauer des CPS-Abtastfensters ist, und ein Zeitintervall zwischen dem Startzeitpunkt des Ziel-CPS-Abtastfensters und einem Startzeitpunkt der ersten Ressource im Kandidatressourcensatz kleiner oder gleich der Zeitdauer des CPS-Abtastfensters ist.

2. Verfahren nach Anspruch 1, wobei ein Zeitintervall zwischen dem Startzeitpunkt des Ziel-CPS-Abtastfensters und einem ersten Zeitpunkt gleich der Zeitdauer des CPS-Abtastfensters ist, wobei der erste Zeitpunkt der Spätere von dem Startzeitpunkt der On-Duration und dem Startzeitpunkt der ersten Ressource in dem Kandidatressourcensatz ist.

3. Verfahren nach Anspruch 1 oder 2, wobei, als Reaktion darauf, dass der Startzeitpunkt der On-Duration später ist als der Startzeitpunkt der ersten Ressource in dem Kandidatressourcensatz, das Zeitintervall zwischen dem Startzeitpunkt des Ziel-CPS-Abtastfensters und dem Startzeitpunkt der On-Duration gleich der Zeitdauer des CPS-Abtastfensters ist; und
   wobei, als Reaktion darauf, dass der Startzeitpunkt der ersten Ressource in dem Kandidatressourcensatz später ist als der Startzeitpunkt der On-Duration, das Zeitintervall zwischen dem Startzeitpunkt des Ziel-CPS-Abtastfensters und dem Startzeitpunkt der ersten Ressource in dem Kandidatressourcensatz gleich der Zeitdauer des CPS-Abtastfensters ist.

4. Verfahren nach einem der Ansprüche 1 bis 3, wobei der Kandidatressourcensatz ein Satz von Ressourcen ist, die auf der Grundlage von periodenbasierter Teilabtastung (PBPS) ausgewählt sind.

5. Verfahren nach einem der Ansprüche 1 bis 4, wobei die Zeitdauer des CPS-Abtastfensters 31 Slots beträgt.

6. Verfahren nach einem der Ansprüche 1 bis 5, ferner umfassend:

   Bestimmen, durch die erste Vorrichtung, eines Ressourcenauswahlsatzes gemäß einem Abtastergebnis im CPS-Abtastfenster;
   Auswählen, durch die erste Vorrichtung, einer Ziel-Zeitfrequenz-Ressource aus dem Ressourcenauswahlsatz;
   Übertragen, durch die erste Vorrichtung, von Sidelink-Daten an die zweite Vorrichtung auf der Ziel-Zeitfrequenz-Ressource.

7. Gerät (1000) für drahtlose Kommunikation, wobei das Gerät (1000) eine erste Vorrichtung ist und umfasst:

   eine Bestimmungseinheit (1010), die dazu konfiguriert ist, einen Startzeitpunkt eines Ziel-Contiguous-Partial-Sensing (CPS)-Abtastfensters basierend auf einer On-Duration einer zweiten Vorrichtung zu bestimmen, wobei ein Zeitintervall zwischen dem Startzeitpunkt des Ziel-CPS-Abtastfensters und einem Startzeitpunkt der On-Duration kleiner oder gleich einer Zeitdauer des CPS-Abtastfensters ist,
   wobei die Bestimmungseinheit (1010) insbesondere dazu konfiguriert ist:
   den Startzeitpunkt des Ziel-CPS-Abtastfensters basierend auf der On-Duration und einem Kandidatressourcensatz zu bestimmen, wobei das Zeitintervall zwischen dem Startzeitpunkt des Ziel-CPS-Abtastfensters und dem Startzeitpunkt der On-Duration kleiner oder gleich der Zeitdauer des CPS-Abtastfensters sein soll, und ein Zeitintervall zwischen dem Startzeitpunkt des Ziel-CPS-Abtastfensters und einem Startzeitpunkt der ersten Ressource im Kandidatressourcensatz kleiner oder gleich der Zeitdauer des CPS-Abtastfensters sein soll.

8. Gerät (1000) nach Anspruch 7, wobei ein Zeitintervall zwischen dem Startzeitpunkt des Ziel-CPS-Abtastfensters und einem ersten Zeitpunkt gleich der Zeitdauer des CPS-Abtastfensters ist, wobei der erste Zeitpunkt der Spätere von dem Startzeitpunkt der On-Duration und dem Startzeitpunkt der ersten Ressource in dem Kandidatressourcensatz ist.

9. Gerät (1000) nach Anspruch 7 oder 8, wobei, als Reaktion darauf, dass der Startzeitpunkt der On-Duration später ist als der Startzeitpunkt der ersten Ressource in dem Kandidatressourcensatz, das Zeitintervall zwischen dem Startzeitpunkt des Ziel-CPS-Abtastfensters und dem Startzeitpunkt der On-Duration gleich der Zeitdauer des CPS-Abtastfensters ist; und

   wobei, als Reaktion darauf, dass der Startzeitpunkt der ersten Ressource in dem Kandidatressourcensatz später ist als der Startzeitpunkt der On-Duration, das Zeitintervall zwischen dem Startzeitpunkt des Ziel-CPS-Abtastfensters und dem Startzeitpunkt der ersten Ressource in dem Kandidatressourcensatz gleich der Zeitdauer des CPS-Abtastfensters ist.

10. Gerät (1000) nach einem der Ansprüche 7 bis 9, wobei der Kandidatressourcensatz ein Satz von Ressourcen ist, die auf der Grundlage von periodenbasierter Teilabtastung (PBPS) ausgewählt sind.

11. Gerät (1000) nach einem der Ansprüche 7 bis 10, wobei die Zeitdauer des CPS-Abtastfensters 31 Slots beträgt.

12. Gerät (1000) nach einem der Ansprüche 7 bis 11, wobei die Bestimmungseinheit (1010) ferner konfiguriert ist, einen Ressourcenauswahlsatz gemäß einem Abtastergebnis im CPS-Abtastfenster zu bestimmen;
   wobei das Gerät (1000) ferner umfasst:

   eine Auswahleinheit (1020), die dazu konfiguriert ist, eine Ziel-Zeitfrequenz-Ressource aus dem Ressourcenauswahlsatz auszuwählen; und
   eine Übertragungseinheit (1030), die dazu konfiguriert ist, Sidelink-Daten an die zweite Vorrichtung auf der Ziel-Zeitfrequenz-Ressource zu übertragen.

13. Computerlesbares Speichermedium, auf dem ein Programm gespeichert ist, das einen Computer veranlasst, das Verfahren nach einem der Ansprüche 1 bis 6 durchzuführen.

## Revendications

1. Procédé de communication sans fil, comprenant :

   déterminer (S710), par un premier dispositif, un temps de début d'une fenêtre de détection de détection partielle continue, CPS, cible, sur la base d'une durée active d'un deuxième dispositif, un intervalle temporel entre le temps de début de la fenêtre de détection CPS cible et un temps de début de la durée active étant inférieur ou égal à une durée de la fenêtre de détection CPS,
   dans lequel la détermination, par le premier dispositif, le temps de début de la fenêtre de détection CPS cible sur la base de la durée active du deuxième dispositif comprend :
   déterminer, par le premier dispositif, le temps de début de la fenêtre de détection CPS cible sur la base de la durée active et d'un ensemble de ressources candidates, l'intervalle temporel entre le temps de début de la fenêtre de détection CPS cible et le temps de début de la durée active étant inférieur ou égal à la durée de la fenêtre de détection CPS, et un intervalle temporel entre le temps de début de la fenêtre de détection CPS cible et un temps de début de la première ressource dans l'ensemble de ressources candidates étant inférieur ou égal à la durée de la fenêtre de détection CPS.

2. Procédé selon la revendication 1, dans lequel un intervalle temporel entre le temps de début de la fenêtre de détection CPS cible et un premier temps est égal à la durée de la fenêtre de détection CPS, le premier temps étant le postérieur du temps de début de la durée active et du temps de début de la première ressource dans l'ensemble de ressources candidates.

3. Procédé selon la revendication 1 ou 2, dans lequel en réponse à ce que le temps de début de la durée active soit postérieur au temps de début de la première ressource dans l'ensemble de ressources candidates, l'intervalle temporel entre le temps de début de la fenêtre de détection CPS cible et le temps de début de la durée active est égal à la durée de la fenêtre de détection CPS ; et
   dans lequel en réponse à ce que le temps de début de la première ressource dans l'ensemble de ressources candidates soit postérieur au temps de début de la durée active, l'intervalle temporel entre le temps de début de la fenêtre de détection CPS cible et le temps de début de la première ressource dans l'ensemble de ressources candidates est égal à la durée de la fenêtre de détection CPS.

4. Procédé selon l'une quelconque des revendications 1 à 3, dans lequel l'ensemble de ressources candidates est un ensemble de ressources sélectionnées sur la base d'une détection partielle périodique, PBPS.

5. Procédé selon l'une quelconque des revendications 1 à 4, dans lequel la durée de la fenêtre de détection CPS est de 31 créneaux.

6. Procédé selon l'une quelconque des revendications 1 à 5, comprenant en outre :

   déterminer, par le premier dispositif, un ensemble de sélections de ressources selon un résultat de détection dans la fenêtre de détection CPS ;
   sélectionner, par le premier dispositif, une ressource temps-fréquence cible de l'ensemble de sélections de ressources ;
   transmettre, par le premier dispositif, des données de liaison latérale au deuxième dispositif sur la ressource temps-fréquence cible.

7. Appareil (1000) de communication sans fil, dans lequel l'appareil (1000) est un premier dispositif et comprend :

   une unité de détermination (1010), configurée pour déterminer un temps de début d'une fenêtre de détection de détection partielle continue, CPS, cible, sur la base d'une durée active d'un deuxième dispositif, un intervalle temporel entre le temps de début de la fenêtre de détection CPS cible et un temps de début de la durée active étant inférieur ou égal à une durée de la fenêtre de détection CPS,
   dans lequel l'unité de détermination (1010) est en particulier configurée pour :
   déterminer le temps de début de la fenêtre de détection CPS cible sur la base de la durée active et d'un ensemble de ressources candidates, l'intervalle temporel entre le temps de début de la fenêtre de détection CPS cible et le temps de début de la durée active étant inférieur ou égal à la durée de la fenêtre de détection CPS, et un intervalle temporel entre le temps de début de la fenêtre de détection CPS cible et un temps de début de la première ressource dans l'ensemble de ressources candidates étant inférieur ou égal à la durée de la fenêtre de détection CPS.

8. Appareil (1000) selon la revendication 7, dans lequel un intervalle temporel entre le temps de début de la fenêtre de détection CPS cible et un premier temps est égal à la durée de la fenêtre de détection CPS, le premier temps étant le postérieur du temps de début de la durée active et du temps de début de la première ressource dans l'ensemble de ressources candidates.

9. Appareil (1000) selon la revendication 7 ou 8, dans lequel en réponse à ce que le temps de début de la durée active soit postérieur au temps de début de la première ressource dans l'ensemble de ressources candidates, l'intervalle temporel entre le temps de début de la fenêtre de détection CPS cible et le temps de début de la durée active est égal à la durée de la fenêtre de détection CPS ; et
dans lequel en réponse à ce que le temps de début de la première ressource dans l'ensemble de ressources candidates soit postérieur au temps de début de la durée active, l'intervalle temporel entre le temps de début de la fenêtre de détection CPS cible et le temps de début de la première ressource dans l'ensemble de ressources candidates est égal à la durée de la fenêtre de détection CPS.

10. Appareil (1000) selon l'une quelconque des revendications 7 à 9, dans lequel l'ensemble de ressources candidates est un ensemble de ressources sélectionnées sur la base d'une détection partielle périodique, PBPS.

11. Appareil (1000) selon l'une quelconque des revendications 7 à 10, dans lequel la durée de la fenêtre de détection CPS est de 31 créneaux.

12. Appareil (1000) selon l'une quelconque des revendications 7 à 11, dans lequel l'unité de détermination (1010) est en outre configurée pour déterminer un ensemble de sélections de ressources selon un résultat de détection dans la fenêtre de détection CPS ; et
dans lequel l'appareil (1000) comprend en outre :

   une unité de sélection (1020), configurée pour sélectionner une ressource temps-fréquence cible de l'ensemble de sélections de ressources ; et
une unité de transmission (1030), configurée pour transmettre des données de liaison latérale au deuxième dispositif sur la ressource temps-fréquence cible.

13. Support de stockage lisible par ordinateur, stockant un programme amenant un ordinateur à exécuter le procédé selon l'une quelconque des revendications 1 à 6.

**FIG. 1**

**FIG. 2**

**FIG. 3**

**FIG. 4**

**FIG. 5**

Resource selection
triggering slot

CPS sensing window

Y • • • Candidate resource set

←——M slots——→

z

z

n

On duration

**FIG. 6**

A first device determines a start time of a target CPS sensing
window based on an on duration of a second device

S710

**FIG. 7**

Resource selection
triggering slot

CPS sensing window

Candidate resource set

←——M slots——→

n

On duration

**FIG. 8**

Resource selection
triggering slot

CPS sensing window

Candidate resource set

—M slots—

$n$

On duration

**FIG. 9**

Apparatus 1000

Determining unit 1010

Selecting unit 1020

Transmitting unit 1030

**FIG. 10**

Apparatus 1100

Processor
1110

Memory
1120

Transceiver
1130

**FIG. 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **OPPO**. Discussion on power saving in NR sidelink communication. *R1-2109059*, 02 October 2021
- **FUJITSU**. Considerations on partial sensing and DRX in NR Sidelink. *R1-2111150*, 05 November 2021

- **ROBERT BOSCH GMBH**. Discussion on sidelink enhancements for power saving. *R1-2112394*, 06 November 2021